# EUROPÄISCHE PATENTSCHRIFT

(11) **EP 0 720 773 B1**
(45) Veröffentlichungstag und Bekanntmachung des Hinweises auf die Patenterteilung: **03.12.1997**
(21) Anmeldenummer: 94926798.3
(22) Anmeldetag: 20.09.1994
(51) Int. Cl.: H01H 11/06

(54) **VERFAHREN ZUM VERBINDEN VON EINER KONTAKTAUFLAGE AUS SILBER-METALLOXID-WERKSTOFF MIT EINEM METALLISCHEN KONTAKTTRÄGER UND ZUGEHÖRIGE KONTAKTAUFLAGE**
PROCESS FOR BONDING A CONTACT LAYER OF SILVER-METAL OXIDE MATERIAL AND A METAL CONTACT BASE, AND SUITABLE CONTACT LAYER
PROCEDE PERMETTANT DE FIXER UN REVETEMENT DE CONTACT EN ARGENT-OXYDE METALLIQUE SUR UN SUPPORT DE CONTACT METALLIQUE, ET REVETEMENT DE CONTACT CORRESPONDANT

(30) Priorität: 20.09.1993 DE 4331913
(43) Veröffentlichungstag der Anmeldung: 10.07.1996
(73) Patentinhaber: SIEMENS AKTIENGESELLSCHAFT, 80333 München (DE)
(72) Erfinder: HAUNER, Franz, D-91341 Röttenbach (DE)
(86) Internationale Anmeldenummer: DE9401090
(87) Internationale Veröffentlichungsnummer: WO9508833

(56) Entgegenhaltungen:
- EP-A- 0 299 099
- DE-B- 2 260 559
- Patent Abstracts of Japan, Band 17, Nr 593(E-1454); & JP,A,05182558 (TOKURIKI HONTEN CO LTD), 1993-07-23
- Derwent's abstract, Nr. 85-72992/12, Woche 8512; & SU,A,1108522, (DNEPR UNIV), 1984-08-15

## Beschreibung

Die Erfindung bezieht sich auf ein Verfahren zum Verbinden von Kontaktauflagen aus cadmiumfreien Silber-Metalloxid-Werkstoffen, die zumindest Zinnoxid oder Eisenoxid als wesentliches Metalloxid enthalten mit einem metallischen Kontaktträger, insbesondere durch Hartlöten oder Schweißen. Daneben bezieht sich die Erfindung auch auf diesbezügliche Kontaktauflagen.

Silber-Metalloxid-Kontaktauflagen können als einzelne Kontaktstücke oder als linear ausgedehnte Kontaktprofile bzw. -bänder realisiert sein und müssen elektrisch und mechanisch mit metallischen Kontaktträgern verbunden werden. Durch die bekannten Methoden des Hartlötens oder Schweißen lassen sich derartige Kontaktauflagen nicht immer sicher mit den Kontaktträgern verbinden. Häufig werden daher derartige Kontaktauflagen mit einer Schicht aus Reinsilber versehen. Das Aufbringen dieser Schicht kann nach unterschiedlichen Herstellungsverfahren erfolgen: Bei Profilen erfolgt dies durch Plattieren der Bänder aus Kontaktmaterial oder durch unmittelbares Zweischichtstrangpressen, bei Herstellung von Formteilen dagegen durch Pressen zweier separat eingebrachter Schichten. In allen Fällen ist das Aufbringen der Reinsilberschicht mit einem erhöhten technischen Aufwand bei der Fertigung verbunden. Damit ergibt sich ein finanzieller Mehraufwand, der zu einer erheblichen Verteuerung solcher Kontaktauflagen führt.

Mit der DE-OS 22 60 559 wurde bereits schon vorgeschlagen, bei einschichtigen Kontaktauflagen, die durch Löten auf metallische Kontaktträger aufgebracht werden sollen, die Metalloxidkomponente chemisch herauszulösen, um bessere Löteigenschaften zu erhalten. Letzteres hat sich aber in der Praxis nicht durchgesetzt, da durch die chemische Entfernung der Metalloxidkomponente nur die unmittelbar an der Oberfläche liegenden Oxide herausgelöst werden. Beim Lotvorgang wird aber in der Regel Silber durch das Lot gelöst, so daß eine ungenügende Oxidentfernung zu einer schlechten Benetzbarkeit und damit zu keiner sicheren Lötung führt.

Aus der SU-A-1108522 ist es bekannt, die Lotseite von Kontaktstücken aus Silber-Metalloxid-Werkstoffen durch elektrochemische Prozesse zu reduzieren, um ohne separate Silberschicht ein Verbinden mit dem Kontaktträger möglich zu machen. Schließlich wird mit der JP-A-5-182558 die Herstellung von Silber-Metalloxid/Metall-Verbundanordnungen auf der Basis von Silber-Cadmiumoxid beschrieben, wobei durch Stromerwärmung in einer N₂/CO-Atmosphäre Streifen des Silber-Cadmiumoxid-Werkstoffes, der weitere Metalloxide als Nebenkomponenten erhalten kann, erhitzt werden und an der Oberfläche des Streifens eine selektive Reduktion erfolgt. Damit wird ein Silber-Cadmium-Lot im oberflächennahen Bereich der Kontaktauflage gebildet, wodurch die Schalteigenschaften an der Schaltseite verloren gehen. Nach dem Verbinden der Kontaktstücke mit dem Kontaktträger muß daher die Kontaktseite wieder aufoxidiert werden.

Aufgabe der Erfindung ist es demgegenüber, Kontaktauflagen speziell aus Werkstoffen auf Silber-Zinnoxid- oder Silber-Eisenoxid-Basis mit metallischen Kontaktträgern zu verbinden, ohne daß die Kontakteigenschaften verschlechtert werden.

Die Aufgabe ist erfindungsgemäß mit folgenden Merkmalen gelöst:
- Die Kontaktauflagen werden vor dem Verbindungsvorgang einer Wärmebehandlung in reduzierender Atmosphäre unterzogen, ohne daß ein Aufschmelzen erfolgt,
- das Metalloxid wird auf der Oberfläche der Verbindungsseite wenigstens teilweise zu Metall reduziert, ohne daß im oberflächennahen Bereich der Schaltseite eine für Kontaktzwecke störende Legierungsbildung auftritt.
Wählt man die Reduktionsparameter so, daß die reduzierte Schicht genügend dick ist, läßt sich insbesondere eine sichere Lötung erreichen. Dabei kann bereits eine teilweise Reduktion eines der Metalloxide hinreichend sein.

Im Rahmen der Erfindung erfolgt die Reduktion des Metalloxides an der Oberfläche und im oberflächennahen Bereich durch Wärmebehandlung, die in einem Glühofen oder durch induktive Erwärmung durchgeführt werden kann. Die Erwärmung kann aber auch durch Strahlung einer geeigneten Hochenergielampe erfolgen, bei der noch kein Aufschmelzen des Werkstoffes auftritt. Für die reduzierende Atmosphäre kommen insbesondere Wasserstoff, Formiergas oder aber Kohlenmonoxid in Frage.

Mit der EP-A-0 288 585 wird zwar bereits ein Verfahren zum Erzeugen einer löt- oder schweißfähigen Unterseite an Silber-MeO-Kontakten vorgeschlagen, bei dem mittels eines rasterförmig überstreichenden Laserstrahls die Unterseite des Kontaktplättchens punktweise aufgeschmolzen und reduziert werden soll. Dafür muß die Oberfläche der Kontaktplättchen zunächst einer Vorbehandlung unterzogen werden, um eine Reflexion des Laserstrahls zu verhindern. Beim Einkoppeln von Laserstrahlung kommt es immer zu lokalen Überhitzungen, was unerwünschte Gefügeänderungen bewirken kann.

Zur Reduktion des Metalloxides an der Oberfläche und im oberflächennahen Bereich ohne Aufschmelzen kann es vorteilhaft sein, die Kontaktauflagen an der Lotseite mit Kohlenstoff zu versehen und so der Wärmebehandlung zu unterziehen. Damit ist es möglich, eine lokale Reduktion nur im Lotbereich zu erreichen. Dazu kann beispielsweise der Kohlenstoff als Graphit auf die Lotseite aufgesprüht werden.

Neben obigen Verfahren, bei denen gezielt die Lotseite behandelt wird und ansonsten die Kontaktseite der Kontaktauflage nach Möglichkeit unbeeinflußt gelassen wird, kann auch speziell dann, wenn das Metall, aus dem das Metalloxid besteht, nicht oder nur gering im Silber lösbar ist, das Metalloxid allseitig an der Oberfläche und im oberflächennahen Bereich zu Metall reduziert werden. Letzteres ist insbesondere dann in vorteilhafter Weise möglich, wenn der Kontaktwerkstoff neben Silber speziell Eisenoxid enthält. Speziell durch Glühen wird in diesem Fall das Eisenoxid auch an der Schaltseite zu Eisen reduziert und enthält somit die Kontaktschicht im Neuzustand Eisen. Da diese Schicht üblicherweise nur wenige µm stark ist, werden aber die Schalteigenschaften nicht verschlechtert. Vielmehr zeigt sich, daß bereits während oder nach dem ersten Schalten der Kontakte Eisenoxid aus dem Grundwerkstoff im Schaltgefüge mit zum Tragen kommt bzw. das Eisen wieder aufoxidiert.

Weitere Einzelheiten und Vorteile der Erfindung ergeben sich aus der nachfolgenden Beschreibung von Ausführungsbeispielen, wobei teilweise auf Gefügebilder Bezug genommen wird. Es zeigen jeweils nach der erfindungsgemäßen Behandlung
- FIG. 1: ein metallographisches Schliffbild der Oberfläche und des oberflächennahen Bereiches eines Kontaktstückes aus Ag/Fe₂O₃ und
- FIG. 2: ein metallographisches Schliffbild der Oberfläche und des oberflächennahen Bereiches eines Kontaktstückes aus Ag/Fe₂O₃/ZrO₂·

### Beispiel 1:

Es werden Kontaktauflagen aus einem Werkstoff der Konstitution AgSnO₂Bi₂O₃CuO hergestellt. Derartige Kontaktwerkstoffe und die zugehörige pulvermetallurgische Herstellung sind aus der EP-A-0 164 664 und der EP-A-0 170 812 bekannt, wobei dort die Verwendung inneroxidierter Legierungspulver angegeben ist. Dazu werden für die Konzentrationen der Einzelkomponenten der Legierung geeignete Randbedingungen eingehalten. Die Herstellung der Kontaktstücke erfolgt dort sintertechnisch als Formteil.

Nach sintertechnischer Herstellung der Formteilkontaktstücke wird durch induktive Erwärmung unter Formiergas, welches in Abhängigkeit von der Frequenz gezielt steuerbar ist, vorteilhafterweise eine oberflächennahe Reduktion der Metalloxide durchgeführt.

Gegebenenfalls ist für Erwärmung auch eine Energiestrahlbehandlung mittels einer Hochenergielampe möglich. Eine Hochenergielampe hat eine solche Energiedichte, daß im allgemeinen noch kein Aufschmelzen und damit eine flüssige Phase, aber trotzdem im Oberflächenbereich eine hinreichende Temperaturverteilung zur schnellen Reduktion der störenden Oxide vorliegt. Bei dieser Erwärmung kann es günstig sein, statt der reduzierenden Gasatmosphäre Kohlenstoff als Reduktionsmittel einzusetzen. Insbesondere kann die Lotseite von Kontaktauflagen mit Graphit besprüht werden, so daß die Reduktion des Metalloxides nur in diesem Bereich erfolgt.

### Beispiel 2:

In der Praxis haben sich seit kurzem Silber-Eisenoxid-Werkstoffe bewährt. Beispielsweise wurde ein Kontaktwerkstoff Ag/Fe₂O₃10 untersucht. Da aufgrund der geringen Löslichkeit des Eisens im Silber die innere Oxidation eines Legierungspulvers nicht möglich ist, werden zur Herstellung dieses Werkstoffes Einzelpulver aus Silber und Eisenoxid miteinander gemischt. Die Herstellung von Kontaktauflagen erfolgt durch bekannte sintertechnische Methoden als Formteil oder Band.

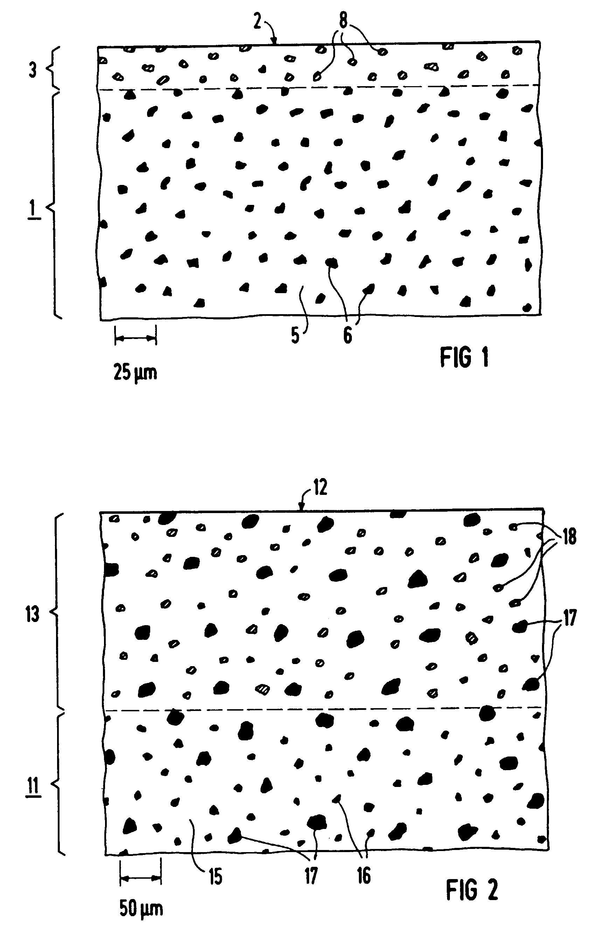

Werden derartige Kontaktauflagen bei 500°C für eine halbe Stunde in Wasserstoff geglüht, ergibt sich bis zu einem Bereich von ca. 20 µm eine weitgehend vollständige Reduktion des Eisenoxids zu Eisen. In FIG. 1 ist der Grundwerkstoff des Kontaktstückes mit einem Verbundgefüge mit 1, die Oberfläche des Kontaktstückes mit 2 und der Oberflächenbereich mit 3 bezeichnet. Der Bereich des Grundwerkstoffes 1 besteht aus einer Silbermatrix 5 mit darin eingelagerten Eisenoxidpartikeln 6, die dunkle Partikel bilden. Es ist erkennbar, daß an der Oberfläche 2 und 3 im Bereich 3 keine Eisenoxidteilchen 6, sondern hellere Eisen-Partikel vorhanden sind, die durch die Reduktion entstanden sind.

Ein Anteil von unter 10 % Massenanteilen Eisen nach der Reduktion im Silber führt bei Verwendung von geeignetem Lot zu einer sicheren Lötverbindung. Es sind daher in bekannter Weise die gleichen Verbindungstechnologien wie beim Stand der Technik mit separater Silberschicht möglich, sofern die Reduktionsparameter entsprechend gewählt werden.

Da bei der beschriebenen Vorgehensweise insbesondere auch die Schaltfläche reduziert ist, liegt bei Kontaktstücken im Neuzustand zunächst Eisen in elementarer Form vor.

Hierdurch können bei den ersten Schaltungen die Temperatureigenschaften geringfügig verändert sein und sich erst im Verlauf der Schaltungen an den gewünschten Wert anpassen.

### Beispiel 3:

Für die Anwendung in verschiedenen Niederspannungsschützen haben sich Werkstoffe auf der Basis von Silber-Eisenoxid mit zusätzlichem Zirkonoxid-Anteil bewährt, insbesondere ein Kontaktwerkstoff Ag/Fe₂O₃5,4/ZrO₂l. Derartige Werkstoffe sind in der älteren nichtvorveröffentlichten Patentanmeldung WO-A-92/22080 beschrieben. Da Silber, Eisen und Zirkon nur eine geringe Löslichheit haben, erfolgt die Herstellung dieses Werkstoffes pulvermetallurgisch durch das Mischen der einzelnen Metalloxidpulver. Durch eine Strangpreßtechnik läßt sich damit ein Band oder Profil dieses Werkstoffes erzeugen, von dem später einzelne Kontaktstücke abgelängt werden können.

Wenn ein solches Band in einem Glühofen bei einer Temperatur von 500°C über eine Zeit von etwa einer halben Stunde in Wasserstoff geglüht wird, wird das Eisenoxid an der Oberfläche und im oberflächennahen Bereich des Bandes bis zu einer Tiefe von ca. 200 µm reduziert. Das Zirkonoxid, das in vergleichsweise geringer Menge vorliegt, reagiert bei einer Erwärmungstemperatur von 600°C praktisch noch nicht, so daß diesbezüglich keine Reduktion erfolgt.

Nach dem Ablängen ergeben sich damit Kontaktstücke, bei denen die Lotseiten als Metalloxid lediglich noch Zirkonoxid aufweisen. Ein zugehöriges Gefügebild ist in der Figur 2 dargestellt. Entsprechend Figur 2 sind ein innerer Bereich 11 mit Grundwerkstoff, eine Oberfläche 12 des Kontaktstückes und ein oberflächennaher Bereich 13 vorhanden. Erkennbar ist, daß der Grundwerkstoff 11 aus einer SilberMatrix 15 mit Metalloxidteilchen 16 und 17 aus Fe₂O₃ einerseits und aus ZrO₂ andererseits besteht, wobei das Eisenoxid vergleichsweise feinteilig und das Zirkonoxid vergleichsweise grobteilig ist. Im oberflächennahen Bereich 13 liegen dagegen aus Fe₂O₃ reduzierte Eisenpartikel als hellere Teilchen vor, wogegen das ZrO₂ als grobe Partikel unverändert geblieben ist.

Es hat sich gezeigt, daß ein derart behandeltes Kontaktstück mit Silber-Eisen als Majoritätskomponente an der Oberfläche sicher lötbar ist. Speziell in diesem System ergibt sich, daß die Schalteigenschaften, insbesondere das Temperaturverhalten, nicht wesentlich geändert sind, da auch im Neuzustand der Kontaktstücke an der Schaltseite Zirkonoxid vorhanden ist und überdies bereits nach einigen Schaltungen durch den Energieumsatz bei Luftschützen eine Aufoxidation der Eisenteilchen erfolgt und somit die vorgegebene Konstitution und Konzentration des Kontaktwerkstoffes wieder erreicht wird.

## Patentansprüche

1. Verfahren zum Verbinden von Kontaktauflagen aus cadmiumfreien Silber-Metalloxid-Werkstoffen, die zumindest Zinnoxid oder Eisenoxid als wesentliches Metalloxid enthalten, mit einem metallischen Kontaktträger, insbesondere durch Hartlöten oder Schweißen, mit folgenden Merkmalen:
- Die Kontaktauflagen werden vor dem Verbindungsvorgang einer Wärmebehandlung in reduzierender Atmosphäre unterzogen, ohne daß ein Aufschmelzen erfolgt,
- das Metalloxid wird auf der Oberfläche der Verbindungsseite wenigstens teilweise zu Metall reduziert, ohne daß im oberflächennahen Bereich der Schaltseite eine für Kontaktzwecke störende Legierungsbildung auftritt.

2. Verfahren nach Anspruch 1, **dadurch gekennzeichnet,** daß die Wärmebehandlung in einem Glühofen erfolgt.

3. Verfahren nach Anspruch 2, **dadurch gekennzeichnet,** daß die Wärmebehandlung durch induktive Erwärmung erfolgt.

4. Verfahren nach Anspruch 2, **dadurch gekennzeichnet,** daß die Wärmebehandlung lokal durch Strahlung mit hoher Energiedichte, z.B. Laser oder Hochenergielampen, erfolgt.

5. Verfahren nach Anspruch 2, **dadurch gekennzeichnet,** daß die reduzierende Atmosphäre Wasserstoff (H₂) ist.

6. Verfahren nach Anspruch 2, **dadurch gekennzeichnet,** daß die reduzierende Atmospähre Formiergas ist.

7. Verfahren nach Anspruch 2, **dadurch gekennzeichnet,** daß die reduzierende Atmosphäre Kohlenmonoxid ist.

8. Verfahren nach Anspruch 1, **dadurch gekennzeichnet,** daß die Kontaktauflagen an der Lotseite mit Kohlenstoff versehen und einer Wärmebehandlung unterzogen werden.

9. Verfahren nach Anspruch 8, **dadurch gekennzeichnet,** daß der Kohlenstoff als Graphit auf die Lotseite aufgebracht, vorzugsweise aufgesprüht wird.

10. Verfahren nach Anspruch 1, **gekennzeichnet** in der Anwendung bei Kontaktauflagen aus durch innere Oxidation von Legierungspulver hergestelltem AgSnO₂Bi₂O₃CuO.

11. Verfahren nach Anspruch 1, **gekennzeichnet** in der Anwendung bei Kontaktauflagen von aus der Pulvermischung hergestelltem Ag/Fe₂O₃.

12. Verfahren nach Anspruch 1, **gekennzeichnet** in der Anwendung bei Kontaktauflagen von aus der Pulvermischung hergestelltem Ag/Fe₂O₃/ZrO₂·

13. Kontaktauflage aus einem Silber-Metalloxid-Werkstoff, erhalten nach dem Verfahren gemäß Anspruch 2, mit einer Kontaktschicht an der Schaltseite, wobei der Werkstoff Eisenoxid (Fe₂O₃/Fe₃O₄) als wesentliches Metalloxid sowie gegebenenfalls einen Zusatz von Zirkonoxid (ZrO₂) und Silber als Rest enthält, **dadurch gekennzeichnet,** daß durch die Wärmebehandlung das Eisenoxid (Fe₂O₃/Fe₃O₄) auch an der Schaltseite zu Eisen (Fe) reduziert ist und die Kontaktschicht im Neuzustand Eisen (Fe) enthält.

## Claims

1. Method of bonding contact facings composed of cadmium-free silver/metal oxide materials, which contain as the essential metal oxide at least tin oxide or iron oxide, to a metallic contact carrier, in particular by brazing or welding, having the following features:
- prior to the bonding operation, the contact facings are subjected to a heat treatment in a reducing atmosphere without melting taking place,
- the metal oxide on the surface of the bonding side is at least partially reduced to metal without an alloy formation which is troublesome for contact purposes occurring in the near-surface region of the switching side.

2. Method according to Claim 1, characterized in that the heat treatment is carried out in a roasting furnace.

3. Method according to Claim 2, characterized in that the heat treatment is carried out by inductive heating.

4. Method according to Claim 2, characterized in that the heat treatment is carried out locally by radiation with high energy density, for example lasers or high-energy lamps.

5. Method according to Claim 2, characterized in that the reducing atmosphere is hydrogen (H₂).

6. Method according to Claim 2, characterized in that the reducing atmosphere is forming gas.

7. Method according to Claim 2, characterized in that the reducing atmosphere is carbon monoxide.

8. Method according to Claim 1, characterized in that the contact facings are provided with carbon on the solder side and are subjected to a heat treatment.

9. Method according to Claim 8, characterized in that the carbon is applied, preferably sprayed, as graphite onto the solder side.

10. Method according to Claim 1, characterized by application in contact facings composed of AgSnO₂Bi₂O₃CuO produced by internal oxidation of alloy powder.

11. Method according to Claim 1, characterized by application in contact facings of Ag/Fe₂O₃ produced from the powder mixture.

12. Method according to Claim 1, characterized by application in contact facings of Ag/Fe₂O₃/ZrO₂ produced from the powder mixture.

13. Contact facing composed of silver/metal oxide material obtained by the method according to Claim 2, having a contact layer on the switching side, the material containing iron oxide (Fe₂O₃/Fe₃O₄) as essential metal oxide and also, optionally, an addition of zirconium oxide (ZrO₂) and silver as the remainder, characterized in that the iron oxide (Fe₂O₃/Fe₃O₄) on the switching side too is reduced to iron (Fe) by the heat treatment and the contact layer in the new state contains iron (Fe).

## Revendications

1. Procédé pour lier à un porte-contacts métallique, en particulier par brasage fort ou par soudage, des supports de contact en des matériaux à l'argent-oxyde métallique sans cadmium, qui contiennent au moins de l'oxyde d'étain et de l'oxyde de fer en tant qu'oxyde métallique essentiel, présentant les caractéristiques suivantes :
- les supports de contact sont, avant l'opération de liaison, soumis à un traitement thermique dans une atmosphère réductrice, sans qu'il s'ensuive une fusion,
- l'oxyde métallique est, sur la surface du côté liaison, au moins partiellement réduit en métal, sans qu'apparaisse la formation d'un alliage, gênant pour les contacts, dans la zone proche de la surface du côté connexion.

2. Procédé selon la revendication 1, caractérisé en ce que le traitement thermique est réalisé dans un four de recuit.

3. Procédé selon la revendication 2, caractérisé en ce que le traitement thermique est réalisé par chauffage par induction.

4. Procédé selon la revendication 2, caractérisé en ce que le traitement thermique est réalisé localement par exposition à un rayonnement d'une grande densité d'énergie, provenant par exemple d'un laser ou de lampes à haute énergie.

5. Procédé selon la revendication 2, caractérisé en ce que l'atmosphère réductrice est constituée d'hydrogène (H₂).

6. Procédé selon la revendication 2, caractérisé en ce que l'atmosphère réductrice est constituée d'un gaz inerte protecteur.

7. Procédé selon la revendication 2, caractérisé en ce que l'atmosphère réductrice est constituée de monoxyde de carbone.

8. Procédé selon la revendication 1, caractérisé en ce que les supports de contact sont pourvus de carbone sur le côté brasage, et sont soumis à un traitement thermique.

9. Procédé selon la revendication 8, caractérisé en ce que le carbone est appliqué sur le côté brasage sous forme de graphite, de préférence par projection.

10. Procédé selon la revendication 1, caractérisé par une utilisation sur des supports de contact en AgSnO₂Bi₂O₃CUO préparé par oxydation interne de poudres d'alliage.

11. Procédé selon la revendication 1, caractérisé par une utilisation sur des supports de contact constitués de Ag/Fe₂O₃ fabriqué à partir d'un mélange de poudres.

12. Procédé selon la revendication 1, caractérisé par une utilisation dans des supports de contact constitués d'Ag/Fe₂O₃/ZrO₂ fabriqué à partir d'un mélange de poudres.

13. Support de contact en un matériau à l'argent-oxyde métallique, obtenue par le procédé selon la revendication 2, ayant une couche de contact sur le côté connexion, où le matériau contient en tant qu'oxyde métallique essentiel de l'oxyde de fer (Fe₂O₃/Fe₃O₄) et éventuellement, pour le reste, une addition d'oxyde de zirconium (ZrO₂) et de l'argent, caractérisé en ce que, sous l'effet du traitement thermique, l'oxyde de fer (Fe₂O₃/Fe₃O₄) subit aussi une réduction en fer (Fe) sur le côté connexion, et la couche de contact contient du fer (Fe) à l'état neuf.
